# EUROPEAN PATENT SPECIFICATION

(11) **EP 1 375 680 B1**
(45) Date of publication and mention of the grant of the patent: **08.08.2007**
(21) Application number: 02708728.7
(22) Date of filing: 29.03.2002
(51) Int. Cl.: C21D 1/42, H05B 6/10, B21B 45/00

(54) **SCALE REMOVING METHOD FOR INDUCTION HEATING APPARATUS AND INDUCTION HEATING APPARATUS**
VERFAHREN ZUR ENTFERNUNG VON KESSELSTEIN FÜR INDUKTIONSHEIZVORRICHTUNG UND INDUKTIONSHEIZVORRICHTUNG
PROCEDE DE DETARTRAGE POUR APPAREIL DE CHAUFFAGE PAR INDUCTION ET APPAREIL DE CHAUFFAGE PAR INDUCTION

(30) Priority: 30.03.2001 JP 2001098513
(43) Date of publication of application: 02.01.2004
(73) Proprietor: JFE Steel Corporation, Tokyo (JP); MITSUBISHI DENKI KABUSHIKI KAISHA, Chiyoda-ku Tokyo 100-8310 (JP)
(72) Inventor: AMAGASA, Toshiaki, c/o Intellectual Property Dept. JFE Steel Corp., Chiyoda-ku, Tokyo 100-0011 (JP); KATSURA, Shigefumi, c/o Intellectual Property Dept. JFE Steel Corp., Chiyoda-ku, Tokyo 100-0011 (JP); EGUCHI, Toshinobu, c/o Mitsubishi Denki K.K., Chiyoda-ku, Tokyo 100-8310 (JP)
(74) Representative: Grünecker, Kinkeldey, Stockmair & Schwanhäusser Anwaltssozietät
(86) International application number: PCT/JP2002/003179
(87) International publication number: WO 2002/079523

(56) References cited:
- JP-A- 2000 003 779
- JP-A- 2001 291 578
- JP-A- 2001 342 518
- JP-U- 60 141 909
- US-A- 4 627 259
- PATENT ABSTRACTS OF JAPAN vol. 2000, no. 04, 31 August 2000 (2000-08-31) -& JP 2000 003779 A (KITASHIBA ELECTRIC CO LTD; TOSHIBA CORP; NKK CORP), 7 January 2000 (2000-01-07)
- PIERRET R ET AL: "INDUCTEURS A HAUT FLUX POUR LE RECHAUFFAGE RAPIDE DES PRODUCTS SIDERURGIQUES" CAHIERS D'INFORMATIONS TECHNIQUES DE LA REVUE DE METALLURGIE, REVUE DE METALLURGIE. PARIS, FR, vol. 92, no. 3, 1 March 1995 (1995-03-01), pages 403-413, XP000510247 ISSN: 0035-1563

## Description

### Technical Field

The present invention relates to a method of removing scales in an induction heating apparatus applied to heat a slab (sheet bar) and the like obtained by being roughly rolled in a hot rolling line as one process of, for example, steel sheet manufacturing and to the induction heating apparatus therefor.

### Background Art

When, for example, steel slabs are hot rolled, the slabs extracted from a heating furnace are conventionally rolled one by one. Thus, various troubles as described below are arisen particularly in a finish rolling process after rough rolling:
a) deterioration in quality of a temperature reduced portion of a slab at the leading end thereof caused by low speed rolling in a rough rolling mill;
b) deterioration in quality of a temperature reduced portion of a slab at the trailing end thereof caused by temperature radiation in a process before the beginning of finish rolling after the completion of rough rolling; and
c) deterioration in quality of a heat reduced portion caused by an insufficient temperature increase of the portion of a slab in contact with a skid beam in a heating furnace.

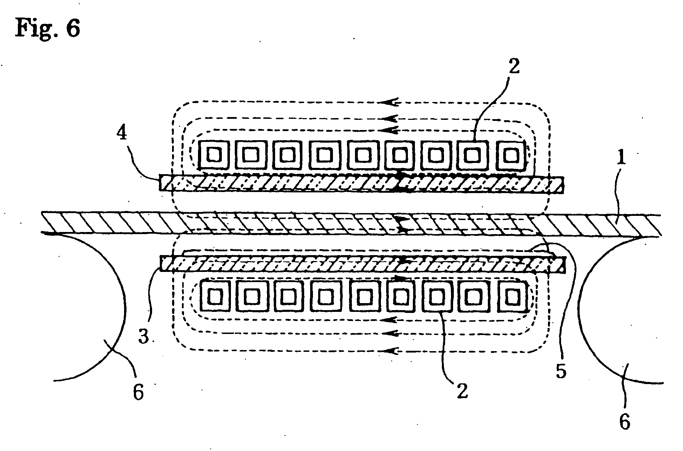

As a counter measure for the above problems, there has been proposed to perform temperature compensation by heating a sheet bar obtained by rough rolling using an induction heating apparatus in a transportation line at the inlet of a finish hot rolling mill. That is, as schematically shown in FIG. 6, the portion of a predetermined region of a sheet bar 1 as a to-be-heated material is enclosed by an induction heating coil 2 in its width and thickness directions, and alternate magnetic field, which passes through the sheet bar 1 entirely or partly in the longitudinal direction thereof, is applied from the induction heating coil 2 to the sheet bar 1, thereby the region of the sheet bar 1 is heated by an induction current produced in the sheet bar 1. That is, in the figure, as shown by dotted lines showing magnetic fluxes flowing in the induction heating coil 2, the high frequency magnetic fluxes produced by the induction heating coil 2 flow such that they pass through the sheet bar 1 in a rolling direction and flow to the back surface of the coil 2 through an end thereof so as to heat the pertinent portion of the sheet bar 1. Note that numeral 6 in the figure denotes rolls for transporting the sheet bar 1.

The method of using the induction heating has a problem in that the induction heating coil is broken by the radiant heat from the sheet bar whose temperature is increased to about 1000°C while it is being heated.

To solve this problem, Japanese Unexamined Patent Application Publication No. 6-31682 discloses a method of disposing heat resistant heat insulating boards 3 and 4 between the induction heating coil 2 and the sheet bar 1 as shown in FIG. 6 in order to shield the coil from the radiant heat of the sheet bar.

While the coil 2 can be protected from the radiant heat of the sheet bar 1 by disposing the heat insulating boards 3 and 4 as described above, a new problem is arisen in that scales formed on a surface of the sheet bar 1 fall and deposit particularly on the heat insulating board 3.

That is, the scales 5 deposited on the heat insulating board 3 are heated by the sheet bar 1 and react with the heat insulating board (refractory), strongly adhere on the heat insulating board 3, and further accelerate the deposition thereof, and thus have a possibility to prevent the passing of the sheet bar 1. Therefore, the scales must be removed in off-line when they deposit in a predetermined thickness or more. However, since the scales 5 strongly adhere on the heat insulating board 3, they cannot help being removed together with the heat insulating board 3 as the refractory.

Accordingly, the scales must be periodically blown off from the heat insulating board 3 before the scales falling on the heat insulating board react therewith. However, since it is difficult to perfectly blow off the scales from the heat insulating board toward the inlet side or the outlet side of the coil 2, remaining scales strongly adhere on the heat insulating board and must be removed finally. As a result, the refractory of the heat insulating board is locally exfoliated and broken.

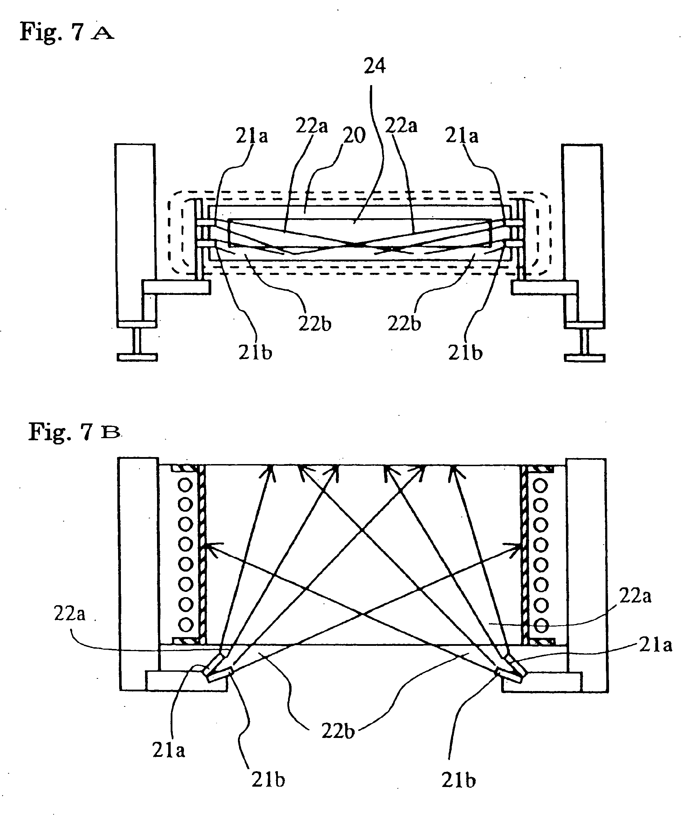

As shown in FIGS. 7A and 7B, Japanese Unexamined Patent Application Publication No. 2000-3779 discloses an induction heating apparatus having a descaler in which air injection nozzles aiming at a heating path 20 are obliquely disposed on both the right and left sides of the induction heating apparatus on the inlet side thereof, that is, the air injection nozzles are disposed at angles with respect to the sheet width direction of a to-be-heated material 24.
Further, the publication discloses an induction heating apparatus on which air injection nozzles 21a, 21b of a descaler are mounted at angles shifted with respect to a sheet width direction as shown in the figure. Note that FIG. 7A shows a sectional view of the to-be-heated material 24 when it is viewed from a transporting direction and FIG. 7B shows a plan view of the same.

However, it is difficult for the induction heating apparatus disclosed in the publication to remove scales over the entire heating path, and scales may partly remain and deposit on the heating path.

### Disclosure of the Invention

It is an object of the present invention to propose a method of perfectly blowing off the scales falling on a heat insulating board therefrom and an apparatus used for the method.

That is, the present invention provides a method of removing scales in an induction heating apparatus comprising a heat resistant heat insulating board disposed inside of an induction heating coil for shielding the radiant heat from a heated material which passes through the inside of the induction heating coil in which the to-be-heated material is heated by an alternate magnetic field applied by the induction heating coil. When scales formed on the surface of the heated material and falling onto the heat insulating board are blown off from the heat insulating board by injecting a gas from the inlet side or the outlet side of the induction heating coil, the scales having fallen on the heat insulating board can be completely blown off and removed by injecting the gas to the heat insulating board at at least two different injection angles with respect to the upper surface of the heat insulating board disposed below the path line.

Here, it is preferable to inject the gas after the application of the alternate magnetic field has been completed. Further, the velocity of the injected gas is preferably about 15 m/sec or more on the entire surface of the heat insulating board.

Further, the method may use an induction heating apparatus comprising a heat resistant heat insulating board disposed inside of an induction heating coil for shielding the radiant heat from a heated material which passes through the inside of the induction heating coil in which the to-be-heated material is heated by an alternate magnetic field applied by the induction heating coil, wherein the induction heating apparatus is arranged such that nozzles for injecting a gas to the heat insulating board are swingably disposed on the inlet side and/or the outlet side of the induction heating coil and the injection angle of the gas to the heat insulating board is variable with respect to the upper surface of the heat insulating board disposed below the path line.

Furthermore, the method may use an induction heating apparatus comprising a heat resistant heat insulating board disposed inside of an induction heating coil for shielding the radiant heat from a heated material which passes through the inside of the induction heating coil in which the to-be-heated material is heated by an alternate magnetic field applied by the induction heating coil, wherein the induction heating apparatus is arranged such that at least two of nozzles for injecting a gas to the heat insulating board are disposed on the inlet end and/or the outlet end of the induction heating coil at different injection angles with respect to the upper surface of the heat insulating board disposed below the path line.

### Brief Description of the Drawings

FIG. 1A is a view explaining removal of scales on a heat insulating board in an induction heating apparatus.
FIG. 1B is a view explaining removal of scales on the heat insulating board in the induction heating apparatus.
FIG. 2A is a view explaining removal of scales on the heat insulating board in the induction heating apparatus.
FIG. 2B is a view explaining removal of scales on the heat insulating board in the induction heating apparatus.
FIG. 3A is a view explaining removal of scales on the heat insulating board in the induction heating apparatus.
FIG. 3B is a view explaining removal of scales on the heat insulating board in the induction heating apparatus.
FIG. 4A is a view explaining removal of scales on the heat insulating board in the induction heating apparatus.
FIG. 4B is a view explaining removal of scales on the heat insulating board in the induction heating apparatus.
FIG. 5 is a view showing a rolling line in which the induction heating apparatus is assembled.
FIG. 6 is a schematic view showing an outline of induction heating.
FIG. 7A is a schematic view showing an induction heating apparatus having a conventional descaler.
FIG. 7B is a schematic view showing the induction heating apparatus having the conventional descaler.

### Best Mode for Carrying Out the invention

The inventors made a diligent study and development of a method of removing scales on a heat insulating board of an induction heating coil by injecting high pressure air thereto.

Note that in figure numbers 1A, 1B, 2A, 2B, 3A, 3B, 4A, and 4B, "A" denotes a side elevational view, and "B" denotes a plan view.

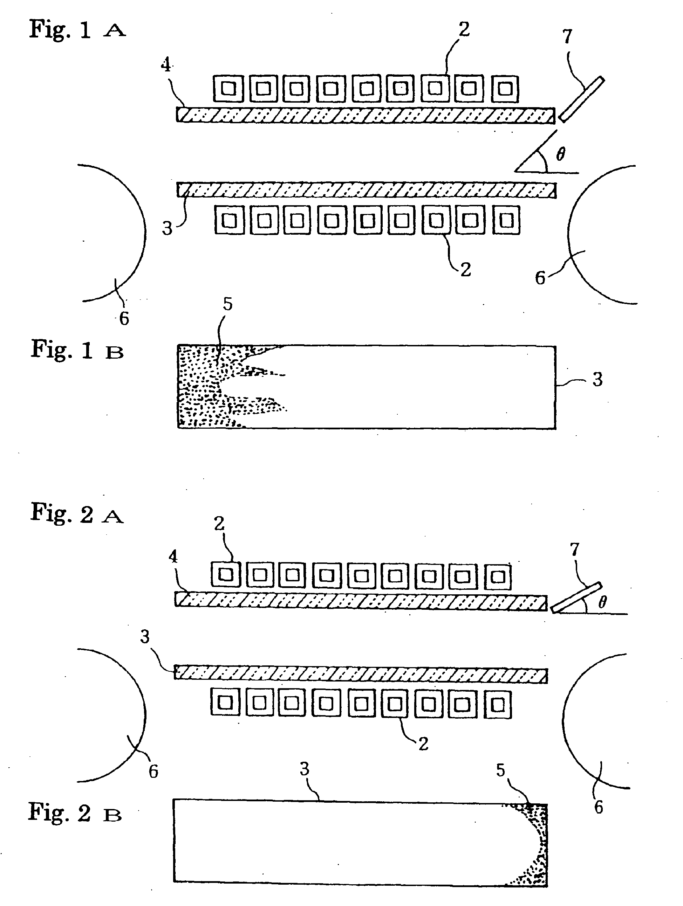

First, when it is intended, as shown in FIG. 1A, to blow off scales 5 depositing on a heat insulating board 3 near to an injection nozzle 7 disposed at the outlet end of an induction heating coil 2, by increasing the injection angle of the blowing air with respect to the.surface of the heat insulating board 3, that is, by increasing the incident angle θ of the blowing air (hereinafter, simply referred to as incident angle) with respect to the upper surface of the heat insulating board 3 disposed below the pass line of a slab, the air speed on the surface of the heat insulating board 3 near to the inlet end of the coil 2 opposite to the injection nozzle 7 is reduced so that the scales cannot be perfectly blown off, thereby the scales 5 remain and deposit on the heat insulating board 3 as shown in FIG. 1B.

Further, when it is intended to blow off the scales 5 on the sheet surface of the heat insulating board 3 near to the inlet end of the coil 2 opposite to the injection nozzle 7 by reducing the incident angle θ of the injection nozzle 7 as shown in FIG. 2A, a portion against which injected air does not impinge arises on the surface near to the injection nozzle 7. Thus, the scales cannot be blown off and deposit on the heat insulating board 3 as shown in FIG. 2B.

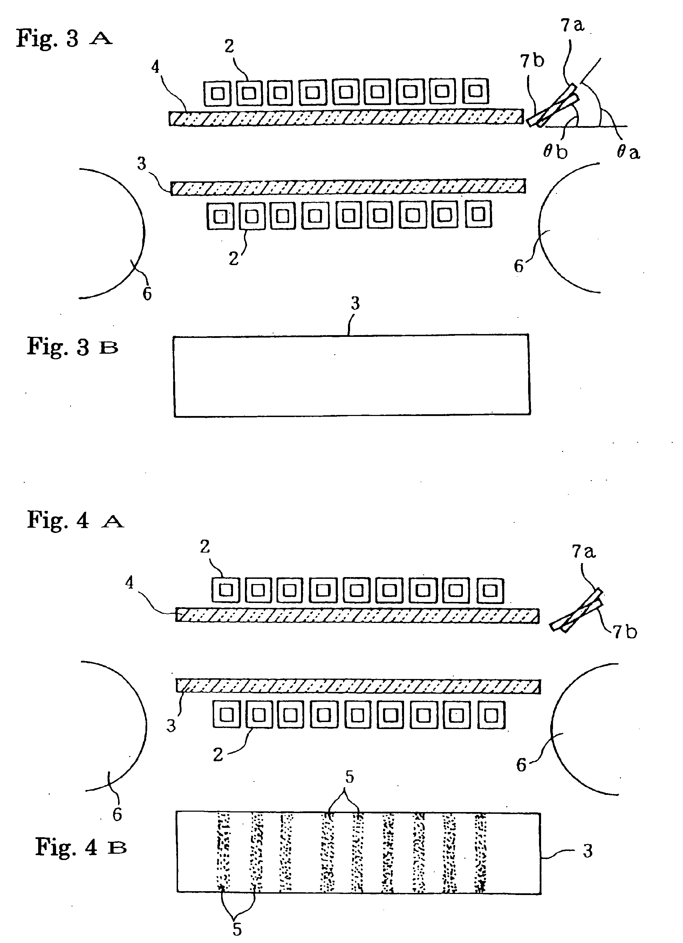

Next, when air is injected from two injection nozzle 7a and 7b disposed at different incident angles θa and θb as shown in FIG. 3A, the scales can be perfectly blown off on the heat insulating board 3 toward the inlet end of the coil 2 as shown in FIG. 3B. Note that instead of disposing the two nozzles at the different incident angles in the example of FIG. 3A, a single nozzle may be swingably disposed and injects air twice at the different incident angles of θa and θb, the scales on the heat insulating board 3 can be perfectly blown off. Further, the number of nozzles disposed at different incident angles or the number of times of injection performed at different angles are not limited to two but may be three or more.

The flow velocity of air necessary to blow off scales was measured under various conditions. As a result, it was found that if the velocity of air that impinges on the heat insulating board is 15 m/sec, the scale can be stably blown off.

Further, the scales 5 falling from the sheet bar 1 have weak magnetism and are attracted to the heat insulating board 3 by a magnetic force while an alternate magnetic field is applied. Thus, when scale removing by injecting high pressure air is conducted while the alternate magnetic field is being applied, there is high frequency that the scales 5 may remain at the positions corresponding to the coil 2 as shown in FIG. 4B. Accordingly, a job for blowing off the scales 5 is preferably executed after the application of the alternate magnetic field is stopped, thereby the scales can be perfectly blown off even from the portions corresponding to the coil.

### (Example)

The present invention will be specifically described below.

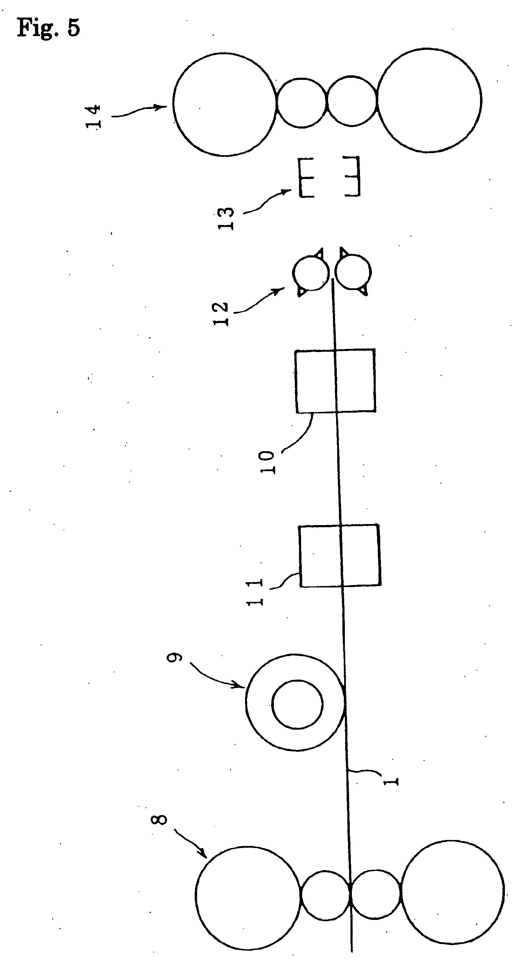

FIG. 5 schematically shows a transportation line, to which the induction heating apparatus of the present invention is suitably applied and in which a splicer is assembled, installed on the inlet end of a finish rolling mill. In the figure, numeral 1 denotes a sheet bar, numeral 8 denotes a rough rolling mill, numeral 9 denotes a coil box used when necessary, numeral 10 denotes the induction heating apparatus shown in FIG. 3, numeral 11 denotes a splicer for splicing a preceding sheet bar to a succeeding sheet bar, numeral 12 denotes a cutter, numeral 13 denotes a descaler (FSB), and numeral 14 denotes a first stand of the finish rolling mill. Note that the splicer 11 is used only when the preceding sheet bar is spliced to the succeeding sheet bar and they are continuously rolled.

In this transportation line, the sheet bar 1 from the rough rolling mill 8 is applied with an alternate magnetic field in its longitudinal direction by a solenoid system as shown in FIG. 6 in the induction heating apparatus 10 and heated by an eddy current induced thereby. This heating is applied to a portion of the sheet bar whose temperature is particularly reduced because the portion is located at an innermost wind or at an outermost wind in a state in which the sheet bar is wound in the coil box 9. As described above, the sheet bar is continuously supplied to the first stand 14 of the subsequent finish rolling mill. Further, the trailing end of the sheet bar is also cut off by the cutter 12 similarly to the leading end thereof.

In the transportation line, the sheet bar having a width of 1300 mm and a thickness of 30 mm (0.5 mass% Si steel), was passed through the induction heating apparatus 10, in which two sets of induction heating coils each having a coil inner width of 2000 mm, a coil inner height of 240 mm, and an entire length of 0.7 m were installed at an interval of 1. 2 m, and heated by application of an alternate magnetic field. Heating conditions at the time was such that an input power was set to 5000 kW for each, a frequency was set 2000 Hz, and the sheet bar was transported at a velocity of 1 m/sec. Then, after the completion of heating, the sheet bar was rolled to a sheet thickness of 2 mm by the seven-stand mill.

In this operation, an alternate magnetic field for the induction heating was interrupted at each time a sheet bar finished passing, that is, at each time before the leading end of a succeeding sheet bar arrived after the trailing end of a preceding sheet bar had passed and then removing scales on the heat insulating board with high pressure air was conducted. That is, as shown in FIG. 3, nozzles 7a and 7b (opening diameter: 5 mm) were disposed at the outlet end of each coil 2 of the induction heating apparatus 10 at the center in the sheet width direction thereof, the incident angles thereof (angles between the surface of the heat insulating board and the nozzles) θa and θb were set to 45° and 25°, and high pressure air was injected at an opening pressure of 150 kPa (it was evaluated that the velocity of air on the surface of the heat insulating board was 15 m/sec or more under the above conditions).

When the scales were removed by the above arrangement, no deposition of scale was found on the heat insulating board even after 100 sheet bars had been rolled, thereby heating could be executed stably over the entire operation.

### Industrial Applicability

According to the present invention, the deposition of scales on the heat insulating board can be prevented in the induction heating apparatus by perfectly blowing off the scales on the heat insulating board by injecting high pressure air through the nozzles, thereby stable induction heating can be realized without change of insulating board for a long period.

## Claims

1. A method of removing scales (5) in an induction heating apparatus in which a heat resistant heat insulating board (3) is disposed inside of an induction heating coil (2) for shielding the radiant heat from a heated material which passes through the inside of the induction heating coil (2) along a pass line and a to-be-heated material is heated by an alternate magnetic field applied by the induction heating coil (2), comprising a step of injecting a gas to the heat insulating board (3) at at least two different injection angles (θₐ, θ_{b}), when scales formed on the surface of the heated material and falling onto the heat insulating board (3) are blown off from the heat insulating board (3) by injecting the gas from one of the inlet end and the outlet end of the induction heating coil (2),
**characterized by**,
injecting said gas to the heat insulating board (3) at said at least two different injection angles (θₐ, θ_{b}) with the respect to the upper surface of said heat insulating board (3) disposed below said pass line.

2. A method of removing scales according to claim 1, wherein the gas is injected after the application of the alternate magnetic field has been finished.

3. A method of removing scales according to claim 1, wherein the velocity of the blown gas is 15 m/sec or more on the entire surface of the heat insulating board (3).

4. An induction heating apparatus in which a heat resistant heat insulating board (3) is disposed inside of an induction heating coil (2) for shielding the radiant heat from a heated material which passes through the inside of the induction heating coil (2) along a pass line and a to-be-heated material is heated by an alternate magnetic field applied by the induction heating coil (2),
**characterized in that**, said apparatus comprising comprises at least one nozzles swingably disposed on at least one of the inlet end and the outlet end of the induction heating coil (2) for injecting a gas to the heat insulating board at at least two a variable different injection angles (θₐ, θ_{b}) with respect to the upper surface of said heat insulating board (3) disposed below said pass line.

5. An induction heating apparatus in which a heat resistant heat insulating board (3) is disposed inside of an induction heating coil (2) for shielding the radiant heat from a heated material which passes through the inside of the induction heating coil (2) along a pass line and a to-be-heated material is heated by an alternate magnetic field applied by the induction heating coil (2), comprising nozzles for injecting a gas to the heat insulating board with at least two of the nozzles (7a 7b) being disposed on one of the inlet end and the outlet end of the induction heating coil (2) at different injection angles (θₐ, θ_{b}),
**characterized in that**,
said at least two nozzles (7a, 7b) are disposed at said different injection angles (θₐ, θ_{b}) with respect to the upper surface of said heat insulating board (3) disposed below said pass line.

## Patentansprüche

1. Ein Verfahren zur Entfernung von Kesselsteinen (5) in einer Induktionsheizvorrichtung, bei welcher eine wärmebeständige Dämmplatte (3) innerhalb einer induktionsheizwicklung (2) zum Abschirmen der Strahlungswärme von einem erwärmten Material angeordnet ist, das durch das Innere der Induktionsheizwicklung (2) entlang einer Durchlaufstrecke verläuft und ein zu erwärmendes Material wird von einem durch die Induktionsheizwicklung (2) angelegten magnetischen Wechselfeld erwärmt, umfassend einen Schritt zum Einblasen eines Gases zu der Wärmedämmplatte (3) unter wenigstens zwei unterschiedlichen Einblaswinkeln (θₐ, θ_{b}) durch Einblasen des Gases von einem von dem Einlassende und dem Auslassende der Induktionsheizwicklung (2), wenn an der Oberfläche des erwärmten Materials ausgebildete Kesselsteine und diese auf die Wärmedämmplatte (3) fallen, von der Wärmedämmplatte (3) abgeblasen werden,
**gekennzeichnet durch**
Einblasen des Gases zu der Wärmedämmplatte (3) unter den wenigstens zwei unterschiedlichen Einblaswinkeln (θₐ, θ_{b}) in Bezug auf die obere Oberfläche der Wärmedämmplatte (3), die unterhalb der Durchlaufstrecke angeordnet ist.

2. Ein Verfahren zur Entfernung von Kesselsteinen gemäß Anspruch 1, wobei das Gas eingeblasen wird, nachdem das Anlegen des magnetischen Wechselfeldes abgeschlossen worden ist.

3. Ein Verfahren zur Entfernung von Kesselsteinen nach Anspruch 1, wobei die Geschwindigkeit des geblasenen Gases 15 m/s oder mehr auf die Gesamtfläche der Wärmedämmplatte (3) ist.

4. Eine Induktionsheizvorrichtung, bei welcher eine wärmbeständige Dämmplatte (3) innerhalb einer Induktionsheizwicklung (2) zum Abschirmen der Strahlungswärme von einem erwärmten Material angeordnet ist, die durch das Innere der Induktionsheizwicklung (2) entlang einer Durchlaufstrecke verläuft und ein zu erwärmendes Material wird von einem durch die Induktionsheizwicklung (2) angelegten magnetischen Wechselfeld erwärmt,
**dadurch gekennzeichnet, dass** die Vorrichtung wenigstens eine Düse umfasst, die verschwenkbar an wenigstens einem von dem Einlassende und dem Auslassende der Induktionsheizwicklung (2) zum Einblasen eines Gases zu der Wärmedämmplatte unter wenigstens zwei unterschiedlichen Einblaswinkeln (θₐ, θ_{b}) in Bezug auf die obere Oberfläche der Wärmedämmplatte (3), die unterhalb der Durchlaufstrecke vorgesehen ist, angeordnet ist.

5. Eine Induktionsheizvorrichtung, bei welcher eine wärmbeständige Dämmplatte (3) innerhalb einer Induktionsheizwicklung (2) zum Abschirmen der Strahlungswärme von einem erwärmten Material angeordnet ist, die durch das Innere der Induktionsheizwicklung (2) entlang einer Durchlaufstrecke verläuft und ein zu erwärmendes Material wird von einem durch die Induktionsheizwicklung (2) angelegten magnetischen Wechselfeld erwärmt, umfassend Düsen zum Einblasen eines Gases zu der Wärmedämmplatte, wobei wenigstens zwei der Düsen (7a, 7b) an einem von dem Einlassende und dem Auslassende der Induktionsheizwicklung (2) bei unterschiedlichen Einblaswinkeln (θₐ, θ_{b}) angeordnet sind,
**dadurch gekennzeichnet, dass**
die wenigstens zwei Düsen (7a, 7b) unter den zwei unterschiedlichen Einblaswinkeln (θₐ, θ_{b}) in Bezug auf die obere Oberfläche der Wärmedämmplatte (3), die unterhalb der Durchlaufstrecke angeordnet ist, angeordnet sind.

## Revendications

1. Procédé permettant d'éliminer la calamine (5) dans un appareil de chauffage par induction dans lequel un panneau thermo-isolant (3) et résistant à la chaleur est disposé à l'intérieur d'un serpentin de réchauffage par induction (2) afin d'empêcher la chaleur radiante d'atteindre un matériau chauffé qui passe à l'intérieur du serpentin de chauffage par induction (2) le long d'une ligne de passe et le matériau à chauffer est chauffé par un champ magnétique alterné appliqué par le serpentin de réchauffage par induction (2), comprenant une étape consistant à injecter un gaz sur le panneau thermo-isolant (3) selon au moins deux angles d'injection différents (ₐ, _{b}), lorsque la calamine formée sur la surface du matériau chauffé et tombant sur le panneau thermo-isolant (3) est éliminée par soufflage du panneau thermo-isolant (3) en injectant le gaz à partir de l'une de l'extrémité d'entrée et de l'extrémité de sortie du serpentin de réchauffage par induction (2),
**caractérisé en ce que**,
on injecte ledit gaz sur le panneau thermo-isolant (3) selon au moins deux angles d'injection différents (ₐ, _{b}) par rapport à la surface supérieure dudit panneau thermo-isolant (3) disposé en dessous de ladite ligne de passe.

2. Procédé permettant d'éliminer la calamine selon la revendication 1, dans lequel le gaz est injecté une fois que l'application du champ magnétique alterné est terminée.

3. Procédé permettant d'éliminer la calamine selon la revendication 1, dans lequel la vitesse du gaz soufflé est égale à 15 m/sec ou plus sur toute la surface du panneau thermo-isolant (3).

4. Appareil de chauffage par induction dans lequel un panneau thermo-isolant (3) et résistant à la chaleur est disposé à l'intérieur d'un serpentin de réchauffage par induction (2) afin d'empêcher la chaleur radiante d'atteindre un matériau chauffé qui passe à l'intérieur du serpentin de réchauffage par induction (2) le long d'une ligne de passe et un matériau à chauffer est chauffé par un champ magnétique alterné appliqué par le serpentin de réchauffage par induction (2),
**caractérisé en ce que** ledit appareil comprend au moins une tuyère disposée de manière oscillante sur au moins l'une de l'extrémité d'entrée et de l'extrémité de sortie du serpentin de réchauffage par induction (2), permettant d'injecter un gaz sur le panneau thermo-isolant selon au moins deux angles d'injection différents (ₐ, _{b}) par rapport à la surface supérieure dudit panneau thermo-isolant (3) disposé en dessous de ladite ligne de passe.

5. Appareil de chauffage par induction dans lequel un panneau thermo-isolant (3) et résistant à la chaleur est disposé à l'intérieur d'un serpentin de réchauffage par induction (2) afin d'empêcher la chaleur radiante d'atteindre un matériau chauffé qui passe à l'intérieur du serpentin de réchauffage par induction (2) le long d'une ligne de passe, et le matériau à chauffer est chauffé par un champ magnétique alterné appliqué par le serpentin de réchauffage par induction (2), comprenant des tuyères permettant d'injecter un gaz sur le panneau thermo-isolant à l'aide d'au moins deux tuyères (7a, 7b) disposées au niveau de l'une de l'extrémité d'entrée et de l'extrémité de sortie du serpentin de réchauffage par induction (2) selon des angles d'injection différents (ₐ, _{b}),
**caractérisé en ce que**,
lesdites au moins deux tuyères (7a, 7b) sont disposées selon lesdits angles d'injection différents (ₐ, _{b}) par rapport à la surface supérieure dudit panneau thermo-isolant (3) disposé en dessous de ladite ligne de passe.
